# EUROPÄISCHE PATENTSCHRIFT

(11) **EP 3 725 464 B1**
(45) Veröffentlichungstag und Bekanntmachung des Hinweises auf die Patenterteilung: **20.07.2022**
(21) Anmeldenummer: 20164791.4
(22) Anmeldetag: 23.03.2020
(51) Int. Cl.: B25B 27/06, B25B 27/10, F16L 19/10, F16L 19/065

(54) **SCHNEIDRING MONTAGEVORRICHTUNG**
CUTTING RING MOUNTING APPARATUS
DISPOSITIF DE MONTAGE D'UNE BAGUE DE COUPE

(30) Priorität: 08.04.2019 DE 102019109153
(43) Veröffentlichungstag der Anmeldung: 21.10.2020
(73) Patentinhaber: VOSS Fluid GmbH, 51688 Wipperfürth (DE)
(72) Erfinder: POTT, Harald, 42499 Hückeswagen (DE); BERGHAUS, Gerd, 51515 Kürten (DE); DRUCKENMÜLLER, Michael, 51145 Köln (DE)
(74) Vertreter: Dr. Solf & Zapf Patent- und Rechtsanwalts PartG mbB

(56) Entgegenhaltungen:
- WO-A1-2010/096749
- WO-A1-2013/113586

## Beschreibung

Die Erfindung betrifft eine Vorrichtung zur Montage eines Schneidrings auf einen Endbereich eines Rohres gemäß dem Oberbegriff des Anspruchs 1.

Bei der Vormontage des Schneidrings ist es für die Qualität der Montage von entscheidender Bedeutung, dass das Rohr mit seiner Stirnfläche am Stutzengrund anliegt. Dadurch wird sichergestellt, dass für den folgenden Montageprozess des Schneidrings dieser optimal positioniert ist. Dabei ist der Montagestutzen und insbesondere die Aufnahmevertiefung auf den jeweiligen Außendurchmesser des Rohres und vorzugsweise auch an die Ausgestaltung des Schneidringes angepasst.

Eine Vorrichtung zur Überwachung der Lage einer Stirnfläche eines Rohres ist beispielsweise aus der EP 3 306 162 A bekannt. Bei dieser Vorrichtung wird die Eindringtiefe der Stirnfläche der Rohrleitung in die Aufnahmevertiefung gemessen, wobei die Messeinrichtung in dem Montagestutzen ausgebildet ist. Das hat zur Folge, dass die Messeinrichtung in jedem zu verwendenden Montagestutzen ausgebildet sein muss, weshalb die Stutzen sehr groß, aufwändig und teuer sind.

Aus der WO 2010/096749 A1 ist eine gattungsgemäße Montagevorrichtung bekannt, welche einen Rohrendlagesensor für die Erfassung und Überprüfung der Lage des Leitungsendes aufweist. Dabei wird das Leitungsende in den Montagestutzen so weit eingeführt, bis das Leitungsende in Kontakt mit dem Anschlagmittel steht, wobei das Anschlagmittel axialbeweglich auf einem axial gegen ein erstes Vorspannelement verschiebbaren Verbindungselement aufgeschraubt ist. Wenn die Leitung im Folgenden weiter in Richtung des Anschlagmittels eingesteckt wird, wird das Anschlagmittel zusammen mit dem Verbindungselement verschoben. Ab einer bestimmten Einstecktiefe kommt das Anschlagmittel in Kontakt mit einer Schiebhülse, durch welche das Verbindungselement zentral hindurchführt. Dabei liegt die Schiebhülse mittels eines zweiten Vorspannelementes gegen die Einsteckrichtung vorgespannt in seiner Einbaulage. Sobald das Leitungsende das Anschlagmittel so weit axial verschoben hat, dass das Anschlagmittel in Kontakt mit der Schiebhülse kommt, wird der Rohrendlagesensor ausgelöst. Dabei wird die Lage des Rohres bzw. des Anschlagmittels erst erfasst und gemessen, wenn die Rohrleitung das Anschlagmittel so weit verschoben hat, dass dieses in Kontakt mit der Schiebhülse steht.

Bei dieser gattungsgemäßen Ausführungen wird der Rohrendlagensensor zusammen mit dem Montagestutzen montiert, wobei die Schraubverbindung des Stutzengrunds mit dem ersten Vorspannelement den Montagestutzen mit einem Werkzeugträger mechanisch verbindet. Das ist in der Montage aufwändig und erschwert den Wechsel der Montagestutzen. Weiterhin ist die Kombination von einem ersten federvorgespannten Vorspannelement, welches durch eine federvorgespannte Schiebhülse hindurchführt, aufgrund der ineinander geführten Federelemente fehleranfällig.

Aus der WO 2013/113586 A1 ist ein Ankersystem bekannt, welches ein Ankerbolzen mit einem Spreizkörper und einen Sensor zur Erfassung einer axialen Endlage der Spreizhülse an dem Spreizkörper beim Aufspreizen und axialen bewegen der Spreizhülse umfasst. Weiterhin offenbart die WO 2013/113586 A1 eine Identifizierungseinrichtung, beispielsweise ein Barcode oder ein RFID-Chip welcher von einer Einrichtung ausgelesen werden kann, wobei in Abhängigkeit von den ausgelesenen Daten die von dem Sensor erfassten Daten ausgewertet werden.

Der Erfindung liegt die Aufgabe zugrunde, eine Montagevorrichtung bereitzustellen, welche die aus dem Stand der Technik bekannten Nachteile überwindet, indem sie einen flexibleren und kostengünstigeren Montageprozess ermöglicht.

Die Aufgabe wird erfindungsgemäß durch die Merkmale des Anspruchs 1 dadurch gelöst, dass die Messeinrichtung im Werkzeugträger ausgebildet ist und mit der Schiebhülse zusammenwirkt, welche mittels eines Vorspannmittels gegen das Anschlagmittel anliegend vorgespannt ist und der sich durch die Bohrung erstreckenden Stift in einer Wirkverbindung mit der Schiebhülse im Werkzeugträger steht, und der Stiftkopf an der Schiebhülse anliegt und bei einer axialen Verschiebung des Anschlagmittels entlang der mittleren Längsachse auf die Schiebhülse im Werkzeugträger einwirkt.

Wirkverbindung bedeutet in diesen Zusammenhang, dass das Anschlagmittel über seinen gesamten axial zu der mittleren Längsachse verlaufenden Verfahrweg auf die Schiebhülse einwirkt und diese bei jeder axialen Bewegung innerhalb des Verfahrweges stets beeinflusst. Das Zusammenwirken der Schiebhülse und der im Werkzeugträger ausgebildeten Messeinrichtung beschreibt, dass die Messeinrichtung auf eine Veränderung der Lage der Schiebhülse reagiert und dadurch ein Messergebnis generiert.

Mittels der erfindungsgemäßen Ausführung ist die Messeinrichtung in einem universal für eine Vielzahl von Montagestutzen verwendbaren Werkzeugträger angeordnet. Durch die gegen das Anschlagmittel vorgespannt anliegende Schiebhülse wird die axiale Verschiebung des Anschlagmittels und dadurch der Stirnfläche der Rohrleitung zu jedem Zeitpunkt ab Kontakt der Stirnfläche mit dem Anschlagmittel erfasst, wodurch eine sehr genaue Überwachung des Einsteckvorgangs ermöglicht wird. Weiterhin kann durch die stete Wirkverbindung zwischen dem Anschlagmittel und der Schiebhülse auf eine Schraubverbindung zwischen dem Anschlagmittel und einem zusätzlichen federvorgespannten Verbindungselement verzichtet werden. Dadurch ist der erfindungsgemäße Werkzeugträger weniger fehleranfällig und wartungsintensiv.

Erfindungsgemäß ist ein Stiftkopf an einem durch den Montagestutzen geführten Stift des Anschlagmittels angeordnet. Der Stiftkopf ist dabei an der dem Werkzeugträger zugewandten Seite des Montagestutzens angeordnet und wirkt zum Erfassen einer Lage des Anschlagmittels bzw. der Stirnfläche der Rohrleitung in Bezug auf den Montagestutzen auf die Schiebhülse im Werkzeugträger ein. Insbesondere dient der Stiftkopf als eine Anlagefläche für die Schiebhülse und verschiebt zum Erfassen der Lage des Anschlagmittels die Schiebhülse..

In einer bevorzugten Ausführung weist der Stiftkopf einen RFID-Chip auf. Hierbei weist der Werkzeugträger einen Lese- und/oder Schreibkopf zum Auslesen und/oder Beschreiben des RFID-Chips im Stiftkopf auf. Insbesondere ist hierbei der Lese- und/oder Schreibkopf in der Schiebhülse zusammen mit der Schiebhülse axial der mittleren Längsachse verschiebbar gelagert und kann in einer vorteilhaften Gestaltung durch die axiale Bewegung vom Stiftkopfes verschoben werden. Vorteilhafterweise wird durch die erfindungsgemäße Vorspannung der Schiebhülse hierbei der Lese- und/oder Schreibkopf in eine Datenübertragungsreichweite des RFID-Chips bewegt, wobei der Lese- und/oder Schreibkopf-Montagestutzen unabhängig universal alle Montagestutzen auslesen und/oder beschreiben kann, welche einen RFID-Chip am Stiftkopf ausgebildet haben. Ein erster praktischer Vorteil ist, dass durch den RFID-Chip eine Datenbereitstellung für die Montage erfolgen kann. Beispielsweise ist der Montagestutzen durch den RFID-Chip identifizierbar und/oder die Montageparameter, z. B. Vorschub, Montagekraft, Einstecktiefe der Rohrleitung in den Montagestutzen, etc. sind auslesbar. Eine weitere vorteilhafte Anwendung des RFID-Chips ist ein Zählwerk, welches die Montagevorgänge zählt und dadurch Rückschlüsse auf Wartungsintervalle ermöglicht und/oder die Anzahl der Fehlmontagen hinterlegt, was wiederum ebenfalls Rückschlüsse auf Wartungsintervalle ermöglicht oder die Kostenplanung für bestimmte Bauteilgruppen erleichtert.

Vorzugsweise ist die Messeinrichtung als mindestens eine Positionsüberwachungseinheit ausgebildet, welche vorzugsweise als ein kapazitiver Sensor ausgebildet ist. Hierbei ist die Positionsüberwachungseinheit vorzugsweise in einer Nut in einem Auflager des Werkzeugträgers angeordnet. Wenn die Rohrleitung das Anschlagmittel und damit die Schiebhülse axial verschiebt, reagiert die Positionsüberwachungseinheit auf den dadurch resultierenden axialen Abstand entlang der mittleren Längsachse zu einem an der Schiebhülse ausgebildeten Stützkragen. In dieser Ausführung kann eine Abstandsmessung durch die Positionsüberwachungseinheit in Echtzeit und über den gesamten axialen Verfahrweg des Anschlagmittels erfolgen. Alternativ kann die Positionsüberwachungseinheit ein Zustandssignal erzeugen, wenn ein oder mehrere vorbestimmte Schwellwerte überschritten werden.

Bevorzugt verarbeitet ein Steuergerät das von der Messeinrichtung erzeugte Zustandssignal. Hierbei wird das Zustandssignal derartig verarbeitet, dass auf der Basis des verarbeiteten Zustandssignals die Montage des Schneidrings an dem Rohr gesteuert wird. Das verarbeitete Zustandssignal kann ein Signal, beispielsweise akustisch oder optisch, für einen Monteur sein oder vorzugsweise automatisch den Montageprozess einleiten und steuern.

Weiterhin wird die der Erfindung zugrundeliegende Aufgabe durch ein Verfahren gemäß den Merkmalen des Anspruchs 13 gelöst.

Weitere vorteilhafte Ausgestaltungen der Erfindung ergeben sich aus der folgenden Figurenbeschreibung und den abhängigen Unteransprüchen.

Es zeigen:
- Fig. 1: einen Querschnitt einer erfindungsgemäßen Vorrichtung entlang der mittleren Längsachse in einem nicht montagefähigen Zustand eines eingesteckten Rohres,
- Fig. 2: eine Detailansicht des Bereichs A gemäß Figur 1,
- Fig. 3: eine Detailansicht des Bereichs B gemäß Figur 1,
- Fig. 4: den Querschnitt der erfindungsgemäßen Vorrichtung gemäß Figur 1 entlang der mittleren Längsachsachse in einem montagefähigen Zustand eines eingesteckten Rohres,
- Fig. 5: eine Detailansicht des Bereichs C gemäß Figur 4,
- Fig. 6: eine Detailansicht des Bereichs D gemäß Figur 4,
- Fig. 7: eine Detailansicht des Bereichs E gemäß Figur 1,
- Fig. 8: eine Detailansicht des Bereichs F gemäß Figur 4, und
- Fig. 9: eine erfindungsgemäß hergestellte Schneidringverbindung in einer schematischen Schnittdarstellung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

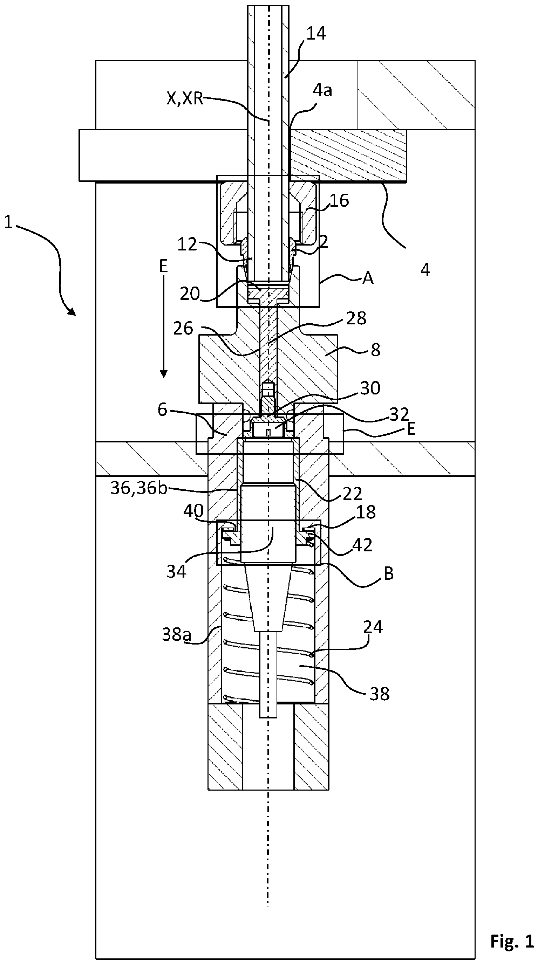

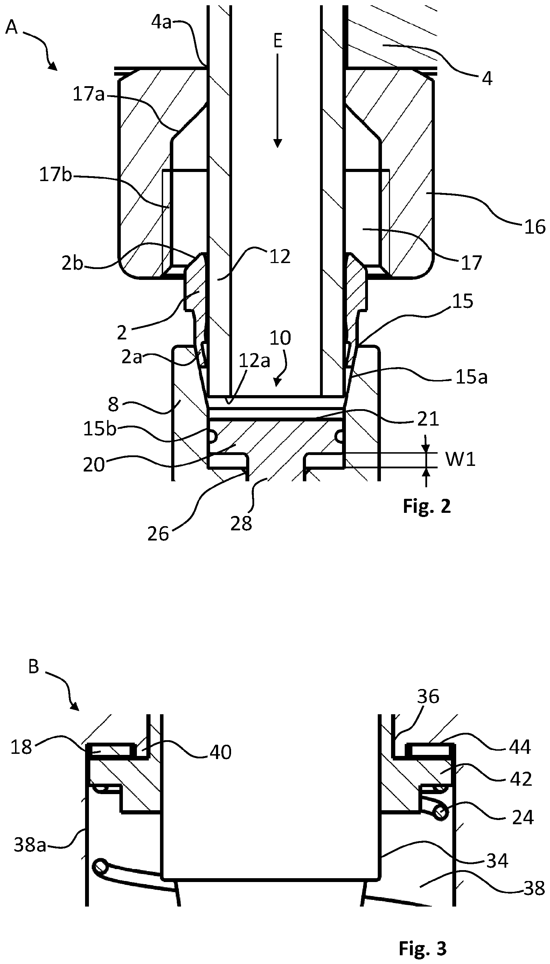

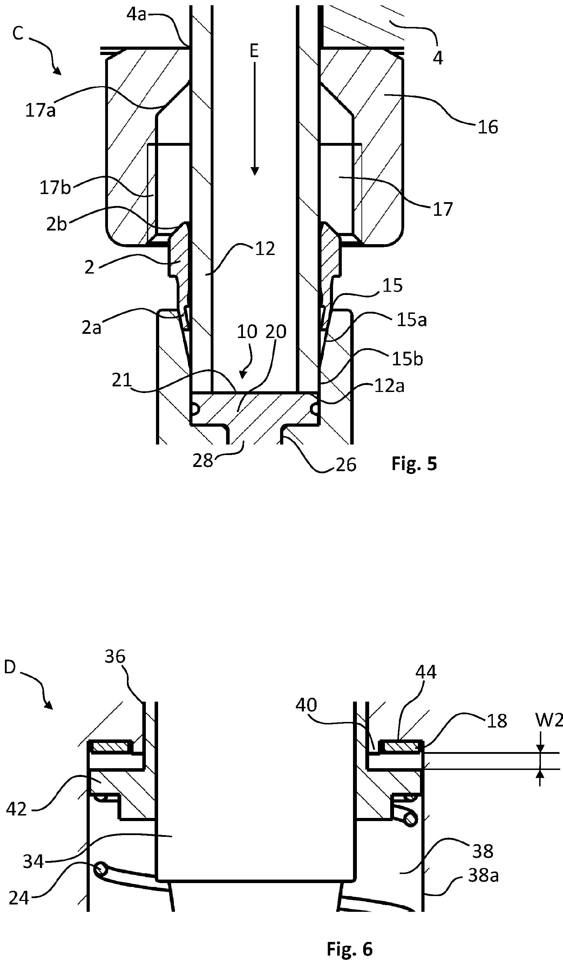

Die Figuren 1 bis 5 zeigen eine erfindungsgemäße Vorrichtung 1 zur Montage eines Schneidrings 2 auf einen Endbereich 12 eines Rohres 14. Die Vorrichtung weist eine Gegenhalteplatte 4 mit einer Durchführöffnung 4a zum Einstecken des Rohres 14, einen Werkzeugträger 6 und einen zwischen dem Werkzeugträger 6 und der Gegenhalteplatte 4 an dem Werkzeugträger 6 gelagerten Montagestutzen 8 auf. Der Montagestutzen 8 ist mittels des Werkzeugträgers 6 entlang einer mittleren Längsachse X zumindest in Richtung der Gegenhalteplatte 4 verschiebbar und weist, wie in den Figuren 2 und 5 dargestellt, eine sich entlang der mittleren Längsachse X erstreckende Aufnahmevertiefung 10 auf.

Die Aufnahmevertiefung 10 ist für eine Aufnahme des Endbereichs 12 des Rohres 14 mit einer Stirnfläche 12a sowie zur Aufnahme des auf den Endbereich 12 aufschiebbaren und auf dem Rohr 14 zu montierenden Schneidrings 2 ausgebildet. In den Figuren 1, 2, 4 und 5 ist die Aufnahmevertiefung 10 in einem derartigen Zustand dargestellt, wobei wie beschrieben das Rohr 14 mit seinem Endbereich 12 und ein Schneidring 2 insbesondere mit mindestens einer Schneidkante 2a in die Aufnahmevertiefung 10 eingeführt ist.

Die Aufnahmevertiefung 10 ist zentral der mittleren Längsachse X ausgebildet und weist eine innere Wandung 15a, 15b sowie eine Öffnung 15 auf. Das Rohr 14 ist mit seiner Stirnseite 12a in die Aufnahmevertiefung 10 durch die Öffnung 15 einführbar. Vorzugsweise ist im Bereich der Öffnung 15 zumindest ein erster Teilabschnitt 15a der inneren Wandung als Innenkonus ausgebildet, wobei sich dem konusförmigen Teilabschnitt 15a insbesondere ein als Innenzylinder ausgebildeter zweiter Teilabschnitt 15b anschließt. Der zweite Teilabschnitt 15b ist vorzugsweise derartig ausgebildet, dass dieser an einem Außenumfang des Rohres14 an dessen Endbereich 12 zumindest bereichsweise anliegt.

Zwischen dem Schneidring 2 und der Gegenhalteplatte 4 kann ein Gegenhalteelement 16 auf dem Rohr 14 angeordnet werden. Die Figuren 1, 2, 4 und 5 zeigen die Vorrichtung 1 mit eingeführter Rohrleitung 14 und einem auf der Rohrleitung 14 zwischen dem Schneidring 2 und der Gegenhalteplatte 4 angeordneten Gegenhalteelement 16. Hierbei begrenzt die Gegenhalteplatte 4 eine Verschiebung des Gegenhalteelementes 16 entlang der Längsachse X.

Die Vorrichtung 1 weist eine Messeinrichtung 18 zum Erfassen einer Lage des in die Aufnahmevertiefung 10 eingeführten Rohres 14 auf. Die Messeinrichtung 18 erfasst die Lage mittels eines in der Aufnahmevertiefung 10 axial zu der mittleren Längsachse X beweglich angeordneten Anschlagmittels 20. Das Anschlagmittel 20 weist, wie in den Figuren 2 und 5 dargestellt, eine zur Stirnfläche 12a des Rohres 14 weisende Auflage 21 auf. Das Rohr 14 wird bei erfindungsgemäßer Verwendung in die Aufnahmevertiefung 10 eingeführt, bis die Stirnfläche 12a auf der Auflage 21 des Anschlagmittels 20 anliegt. Wird das Rohr 14 weiter axial zu der mittleren Längsachse X in die Aufnahmevertiefung 10 hineingeschoben, wird das Anschlagmittel 20 axial zur mittleren Längsachse X innerhalb der Aufnahmeöffnung 10 im Montagestutzen 8 verschoben.

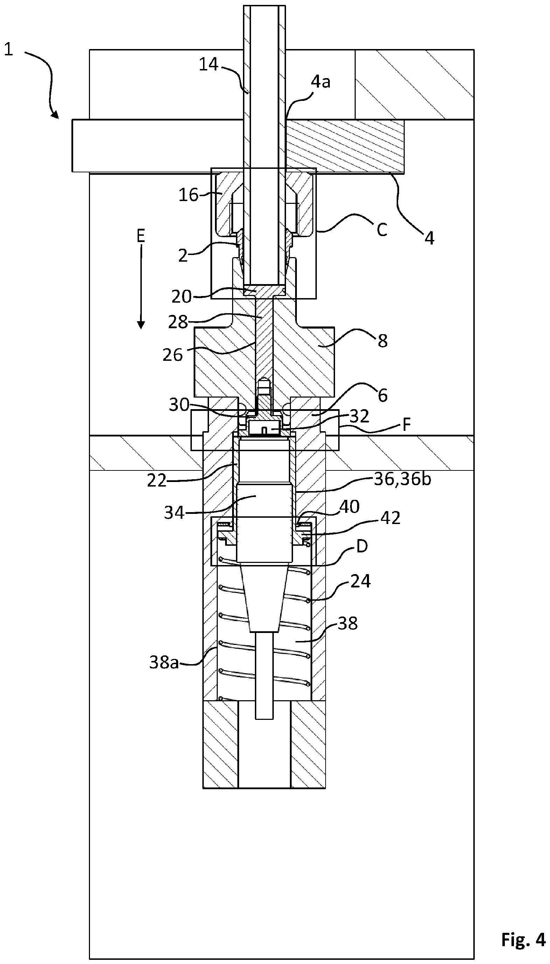

Erfindungsgemäß ist die Messeinrichtung 18 im Werkzeugträger 6 ausgebildet und wirkt mit einer Schiebhülse 22 zusammen. Eine beispielhafte Wirkverbindung ist in den Figuren 1 bis 3 und 7 dargestellt. Die Messeinrichtung 18 ist mittels eines Vorspannmittels 24 gegen das Anschlagmittel 20 derartig anliegend vorgespannt, dass es über seinen gesamten axial zu der mittleren Längsachse X verlaufenden Verfahrweg W1 in Wirkverbindung mit der vorgespannten Schiebhülse 22 steht. Der Verfahrweg W1 und die Positionen des Anschlagsmittels 20 bei einer erfindungsgemäßen Verwendung der Vorrichtung 1 sind in den Figuren 2 und 4 dargestellt. Hierbei ist in Figur 2 ein Zustand dargestellt, bei welchem das Rohr 14 so weit in die Aufnahmevertiefung 10 eingeführt ist, dass die Stirnfläche 12a noch nicht Kontakt mit dem Anschlagmittel 20 hat und das Anschlagmittel 20 noch nicht axial bewegt worden ist. Die Figuren 4 bis 6 und 8 zeigen einen fortgeschrittenen Montagezustand, bei welchem, ausgehend von dem in Figur 2 gezeigten Zustand, das Rohr 14 weiter in die Aufnahmeöffnung bewegt worden ist und dadurch das Anschlagmittel 20 axial über seinen in Figur 2 gekennzeichneten Verfahrweg W1 verschoben hat.

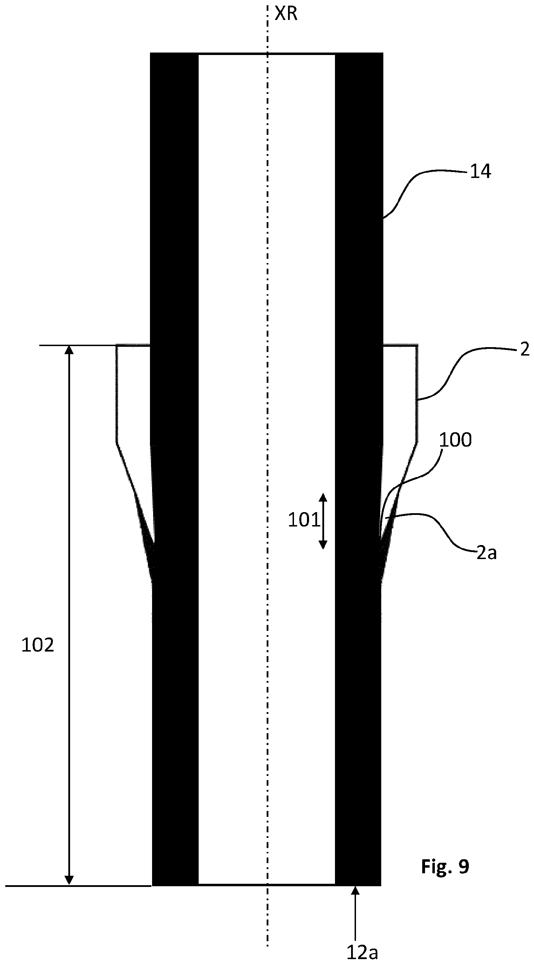

Vorzugsweise ist das Gegenhalteelement 16 als eine um die mittlere Längsachse X um das Rohr 14 drehbare Mutter, insbesondere als Überwurfmutter, ausgebildet. Bei einem erfindungsgemäßen Montageverfahren wird zunächst das Gegenhalteelement 16, insbesondere die Überwurfmutter und der Schneidring 2, über den Endbereich 12 des Rohres 14 geschoben, und anschließend wird das Rohr 14 in die Aufnahmeöffnung 10 des Montagestutzen 8 eingeführt und fixiert. Bei der Montage wird der Montagestutzen 8 mitsamt dem wie zuvor beschrieben eingeführten Rohr 14 entlang der mittleren Längsachse X in Richtung der Gegenhalteplatte 4 bewegt. Insbesondere weist diesbezüglich die Vorrichtung 1 eine Presseinrichtung auf. Das Gegenhalteelement 16 weist einen Aufnahmebereich 17 zur Aufnahme des Schneidrings 2 sowie zur Aufnahme eines Teilbereichs des Montagestutzens 8 auf. Durch die axiale Bewegung des Montagestutzens 8 wird das Gegenhalteelement 16 gegen die Gegenhalteplatte 4 verpresst. Dadurch wird der Schneidring 2 derartig mit einer Montagekraft beaufschlagt, dass die Schneidkante(n) 2a des Schneidrings 2 in das Rohr 14 eindringt/eindringen. Der montierte Zustand ist schematisch in Figur 9 dargestellt.

Vorzugsweise weist der Aufnahmebereich 17 eine als Innenkonus ausgebildete Kontaktfläche 17a auf, welche sich einem Gewindeabschnitt 17b, insbesondere einem Innengewindeabschnitt, anschließt. Dabei weist der Schneidring 2 eine zu der Kontaktfläche 17a korrespondierend ausgebildete Pressfläche 2b auf. Bei der Montage wird die Montagekraft über die an der Kontaktfläche 17a anliegende Pressfläche 2b von dem Gegenhalteelement 16 auf den Schneidring 2 übertragen. Durch die Winkelbemaßung der Kontaktfläche 17a und Pressfläche 2b lässt sich die Montagekraft und die Anschraubkraft der produzierten Rohrleitung einstellen.

Der Montagestutzen 8 weist axial zu seiner mittleren Längsachse X eine Bohrung 26 auf. Diese erstreckt sich durch den Montagestutzen 8. Dabei weist das Anschlagmittel 20 einen Stift 28 auf, welcher sich durch die Bohrung 26 erstreckt und insbesondere vollumfänglich durch die Bohrung 26 geführt wird. Erfindungsgemäß steht das Anschlagmittel 20 mittels seines Stiftes 28 in der Wirkverbindung mit der Schiebhülse 22 im Werkzeugträger 6. Dementsprechend wird über den Stift 28 die Bewegung des Anschlagmittels 20 axial zu der mittleren Längsachse X auf die Schiebhülse 22 übertragen, wodurch diese ebenfalls um den gleichen Weg axial zu der mittleren Längsachse X verschoben wird.

Das Anschlagmittel 20 weist einen Stiftkopf 30 an dem durch den Montagestutzen 8 geführten Stift 28 auf. Der Stiftkopf 30 ist an der dem Werkzeugträger 6 zugewandten Seite des Montagestutzens 8 angeordnet und liegt an der Schiebhülse 22 im Werkzeugträger 8 an. Der Stiftkopf 30 liegt erfindungsgemäß an der Schiebhülse 22 im Werkzeugträger 6 an und wirkt dadurch auf die Schiebhülse 22 bei einer axialen Bewegung entlang der mittleren Längsachse X des Anschlagmittels 20 ein.

In einer vorteilhaften Ausführung ist der Stiftkopf 30 mit dem Stift 28 in einem Verbindungsbereich lösbar verbunden, insbesondere verschraubt. Vorzugsweise liegt der Verbindungsbereich im Bereich der Bohrung 26. Vorteilhaft kann der Stiftkopf 30 und/oder das Anschlagmittel 20 durch die lösbare Verbindung zerstörungsfrei von dem Montagestutzen 8 getrennt und gewartet oder ausgetauscht werden. Ein weiter Vorteil ist, dass der Innendurchmesser der Bohrung 26 und der Außendurchmesser des Stifts 28 kleiner dimensioniert werden können und gleichzeitig der Stiftkopf 30 und die Auflage 21 des Anschlagmittels 20 im Verhältnis zu dem Stift 28 im Durchmesser vergrößert werden können, so dass sowohl die Stirnfläche 12a des Rohres 14 als auch die Montagehülse sicherer an dem Anschlagmittel 20 anliegen.

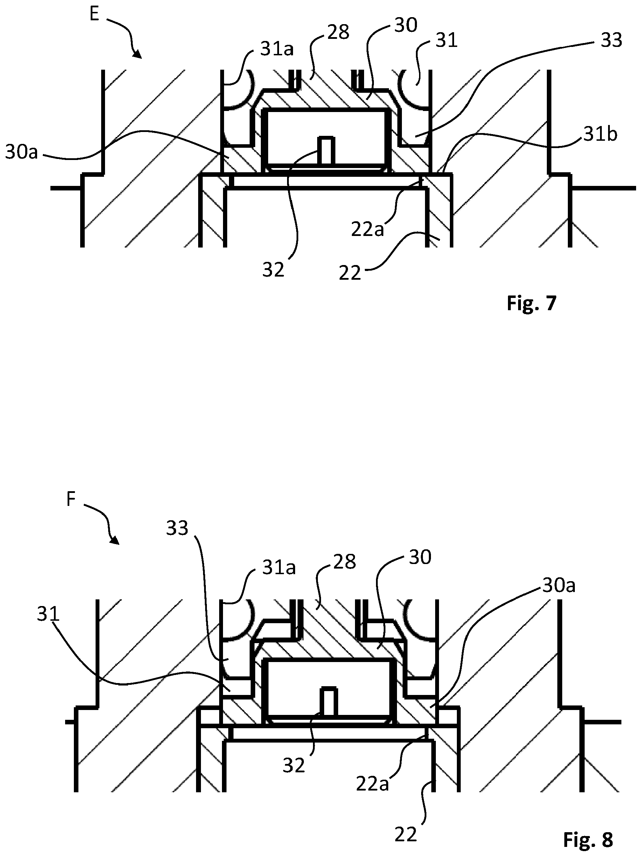

Insbesondere weist der Werkzeugträger 6, wie in den Figuren 7 und 8 dargestellt, einen Einführabschnitt 31 auf, wobei für die Montage der Vorrichtung 1 der Montagestutzen 8 mit einem Einführansatz 33 und mit dem Stiftkopf 30, in den Einführabschnitt 31 des Werkzeugträgers 6 einführbar sind. Im eingeführten Zustand liegen der Einführansatz 33 und der Stiftkopf 30 jeweils vollumfänglich an einer Innenwand 31a des Einführabschnitts 31 an. Vorteilhaft weist der Stiftkopf 30 einen Überstand 30a auf, welcher radial über den Einführansatz 33 ragt und die Auflagefläche für die Schiebhülse 22 bildet. In dieser Ausführung liegen der Einführansatz 33 und der Stiftkopf 30 mit seinem Überstand 30a jeweils vollumfänglich an der Innenwand 31a des Einführabschnitts 31 an.

Vorzugsweise ist der Einführabschnitt 31 im Werkzeugträger 6 derart ausgebildet, dass dieser einen Gegenanschlag 31b für die Schiebhülse 22 bildet, so dass in dem nicht montagefähigen Zustand eines eingesteckten Rohres 14, wie in Figur 7 dargestellt, die axiale Verschiebung der Schiebhülse 22 entlang der Längsachse X begrenzt wird. Insbesondere steht schon bei dem nicht montagefähigen Zustand, wie in Figur 7 dargestellt, die Schiebhülse in direktem Wirkkontakt, d. h. einer direkten Anlage, mit dem Überstand 30a des Stiftkopfes 30.

Figur 8 zeigt den montagefähigen Zustand eines eingesteckten Rohres 14. Die axiale Verschiebung entlang der Längsachse X des Anschlagmittels 20 wird über den Stift 28 und den Überstand 30a des Stiftkopfes 30 auf die Schiebhülse 22 übertragen. Dadurch wird die Schiebhülse 22 axial entlang der Längsachse X aus der ursprünglichen Auflage auf dem Gegenanschlag 31b verschoben. Hierbei ragt ein Haltevorsprung 22a der Schiebhülse 22 an dem dem Montagestutzen 8 zugewandten Ende radial zur Längsachse X nach innen weisend über den Gegenanschlag 31b hinaus und steht in dem direkten Wirkkontakt, d. h. einer direkten Anlage, mit dem Überstand 30a des Stiftkopfes 30.

Gemäß einer weiteren Ausgestaltung weist das Anschlagmittel 20, insbesondere der Stiftkopf 30, einen RFID-Chip 32 auf. Hierbei weist der Werkzeugträger 6 einen Lese- und/oder Schreibkopf 34 zum Auslesen und/oder Beschreiben des RFID-Chips 32 auf. Der RFID-Chip 32 dient der Datenbereitstellung. Beispielsweise ist der Montagestutzen 8 mittels des RFID-Chips 32 identifizierbar und/oder es sind Parameter für den durchzuführenden Montagevorgang auslesbar. Die zentrale Anordnung des RFID-Chips 32 auf dem Stiftkopf 30 ermöglicht Signalübertragung unabhängig von einer um die Längsachse X rotierten Einbaulage des Montagestutzens 8 im Werkzeugträger 6.

Die Figuren 3 und 6 zeigen eine bevorzugte Ausführung, gemäß welcher der Lese- und/oder Schreibkopf 34 in der Schiebhülse 22 zusammen mit der Schiebhülse 22 axial der mittleren Längsachse X verschiebbar gelagert ist. Insbesondere kann der Lese- und/oder Schreibkopf 34 mit der Schiebhülse 22 durch die axiale Bewegung vom Stiftkopf 30 verschoben werden.

Vorzugsweise ist der Werkzeugträger 6 hohlzylindrisch ausgebildet, wobei die Schiebhülse 22 und die Messeinrichtung 18, wie in Figur 1 und 3 dargestellt, innerhalb des hohlzylindrischen Raums angeordnet sind. Im Besonderen weist der Werkzeugträger 6 einen Führungsabschnitt 36 und einen Spannabschnitt 38 auf. Die Schiebhülse 22 liegt hierbei vollumfänglich an einer Innenwand 36a des Führungsabschnittes 36 an. Hierbei wird die Schiebhülse 22 durch den Führungsabschnitt 36 in einer zentralen Lage zur mittleren Längsachse X gehalten, so dass die mittlere Längsachse der Schiebhülse 22 gleich der mittleren Längsachse X ist. Dadurch ist die Schiebhülse 22 entlang der mittleren Längsachse X verschiebbar und um die mittlere Längsachse X rotierbar. Der Spannabschnitt 38 ist gemäß dieser Ausführung derart ausgebildet, dass das Vorspannmittel 24, insbesondere eine Feder, beim Stauchen umfänglich an einer Innenwand 38a des Spannabschnitts 38 geführt wird. Bei einer, durch die axiale Bewegung des Anschlagmittels 20 durch das Einführen des Rohres 14 hervorgerufenen Stauchung des Vorspannmittels 24 verhindert der Spannabschnitt 38, dass sich das Vorspannmittel 24 um die mittlere Längsachse X krümmt und als Folge der Krümmung keine konstante Vorspannkraft gewährleisten kann

Die Querschnittsfläche senkrecht der mittleren Längsachse X des Führungsabschnitts 36 ist vorzugsweise kleiner als die Querschnittsfläche senkrecht der mittleren Längsachse X des Spannabschnitts 38. Eine derartige Ausführung ist in den Figuren 3 und 6 dargestellt. An der Übergangsstelle vom Führungsabschnitt 36 zum Spannabschnitt 38 ist ein Auflager 40 für einen korrespondierend zum Auflager 40 ausgebildeten Stützkragen 42 der Schiebhülse 22 ausgebildet. Vorzugseise sind die in kontaktstehenden Flächen den Auflagers 40 und des Stützkragens senkrecht zur mittleren Längsachse X und vollumfänglich ausgebildet. Das Auflager 40 sowie der Stützkragen 42 sind hierbei derartig ausgebildet, dass die axiale Bewegung der Schiebhülse 22 entlang der mittleren Längsachse X in Richtung zu der Gegenhalteplatte 4 durch die Auflage des Stützkragens 42 auf dem Auflager 40 begrenzt wird. Dieser Zustand ist in dem Ausführungsbeispiel gemäß Figur 1 dargestellt.

Insbesondere ist die Messeinrichtung 18 als eine Positionsüberwachungseinheit, vorzugsweise als ein kapazitiver Sensor ausgebildet. Praktischerweise wird die Positionsüberwachungseinheit in einer Nut 44 im Auflager 40 angeordnet und reagiert auf einen axialen Abstand W2 entlang der mittleren Längsachse X zum Stützkragen 42 der Schiebhülse 22. Vorzugsweise kann die Messeinrichtung 18 als mehrere Positionsüberwachungseinheiten ausgebildet werden, um Messtoleranzen auszugleichen, eine Selbstkontrolle durchführen zu können, oder um bei einer defekten Positionsüberwachungseinheit eine Rückfallebene zu haben.

Gemäß einer Gestaltungsvariante der Erfindung weist die Vorrichtung 1 ein Steuergerät auf, welches ein von der Messeinrichtung 18 erzeugtes Zustandssignal derartig verarbeiten kann, dass auf Basis des verarbeiteten Signals die Montage des Schneidrings 2 an dem Rohr 14 eingeleitet und gesteuert werden kann. Vorteilhaft kann das Steuergerät die Montage automatisch einleiten, wenn das Rohr 14 das Anschlagmittel 20 über einen vorbestimmten axialen Verfahrweg entlang der mittleren Längsachse X in Richtung des Werkzeugträgers 6 verschoben hat.

Das verarbeitete Zustandssignal kann aber auch beispielsweise ein akustisches oder optisches Signal für einen Monteur sein. Hierbei wird basierend auf dem Zustandssignal ein optisches und/oder ein akustisches Informationssignal für einen Anwender bezüglich der Lage der Stirnfläche 12a des Rohres 14 in Bezug auf den Montagestutzen 8 erzeugt. Alternativ oder ergänzend kann das Steuergerät für den Anwender auch ein Informationssignal betreffend den Fortschritt des Montageprozesses erzeugen. So kann ein Fehler oder eine Fehlstellung des Rohres 14 während der Montage mittels der Messeinrichtung 18 und des Steuergeräts dem Anwender aufgezeigt werden, so dass dieser frühzeitig reagieren kann.

Die Vorrichtung 1 wird vorzugsweise in einem Verfahren zur Montage eines Schneidrings 2 an einem Rohr 14 verwendet. In erfindungsgemäßer Art und Weise umfasst die Montage die folgenden Verfahrensschritte:
- Montieren eines Montagestutzens 8 an einem Werkzeugträger 6. Wie in Figur 1 und 3 dargestellt, wird der Montagestutzen 8 zwischen dem Werkzeugträger 6 und der Gegenhalteplatte 4 montiert. Diesem Verfahrensschritt folgt das
- Aufstecken des Gegenhalteelements 16 auf den Endbereich 12 des Rohres 14.

Wie beschrieben hat das Rohr 14 an seinem Endbereich die Stirnfläche 12a ausgebildet und das Gegenhalteelement 16 weist einen Aufnahmebereich 17 zur Aufnahme des Schneidrings 2 sowie einen Teilbereich des Montagestutzens 8 auf. In einem nachfolgenden Verfahrensschritt erfolgt die
- Aufsteckung des zu montierenden Schneidrings 2 mit mindestens der einen Schneidkante 2a auf den Endbereich 12a des Rohres 14.

Vorzugsweise weist die Schneidkante 2a, insbesondere die Schneidkanten 2a, in Richtung des Werkzeugträgers 6, so dass die Schneidkante(n) 2a vom Montagestutzen 8 aufgenommen werden kann/können. Nachfolgend erfolgt die
- Einführung des Endbereiches 12 mitsamt dem Schneidring 2 in die Aufnahmevertiefung 10 des Montagestutzens 8 in einer Einführrichtung E axial zu einer mittleren Längsachse X der Aufnahmevertiefung 10.

Die Einführrichtung E ist in den Figuren 1 und 3 mit einem Pfeil gekennzeichnet. Während und nach dem Einführen liegen der Schneidring 2 und das Gegenhalteelement 16, wie beispielhaft in den Figuren 1 bis 6 dargestellt, zwischen der Gegenhalteplatte 4 und dem Werkzeugträger. Fortfahrend erfolgt die
- Erfassung einer Lage des in die Aufnahmevertiefung 10 eingeführten Rohres 14 mittels eines in der Aufnahmevertiefung 10 axial zu der mittleren Längsachse X beweglich angeordneten Anschlagmittels 20.

Hierbei erfolgt die Lageerfassung des Rohres 14 in Bezug auf den Montagestutzen 8 mit einer Messeinrichtung 18 gemäß dem kennzeichnenden Merkmal des Anspruchs 1. Demgemäß ist die Messeinrichtung 18 im Werkzeugträger 6 ausgebildet und wirkt mit der Schiebhülse 22 zusammen. Die Schiebhülse ist in beschriebener Art ausgebildet und mittels eines Vorspannmittels 24 gegen das Anschlagmittel 20 anliegend vorgespannt. Dementsprechend steht das Anschlagmittel 20 über seinen gesamten axial zu der mittleren Längsachse X verlaufenden Verfahrweg W1 in Wirkverbindung mit der vorgespannten Schiebhülse 22. Nachfolgend erfolgt die
- Beaufschlagung des Schneidrings 2 mit einer Montagekraft.

Die Montagekraft wird vorzugsweise von einer Presseinrichtung erzeugt. Die Montagekraft bewirkt, dass der Werkzeugträger 6 in Richtung der Gegenhalteplatte 4 verschoben wird, so dass die Schneidkante(n) 2a des Schneidrings 2 in das Rohr 14 eindringt/eindringen.

Gemäß einem bevorzugten Montageverfahren erkennt die Vorrichtung 1 folgend der Montage des Montagestutzens 8 in dem Werkzeugträger 6 mittels eines RFID-Chips 32 den Montagestutzen 6. Der RFID-Chip ist hierbei an dem Stiftkopf 30 des Anschlagmittels 10 ausgebildet. Weiterhin ist für diese Funktion ein Lese- und/oder Schreibkopf 34 innerhalb des Werkzeugträgers 6 ausgebildet. Die Vorrichtung 1 wird dadurch befähigt, die montagetechnischen Parameter zur Montage des Schneidrings 2 anzuzeigen, so dass ein Anwender die Parameter auslesen und/oder selbstständig die Parameter für die Montage einstellen kann.

Es liegt weiterhin im Rahmen der Erfindung, dass das Beaufschlagen des Schneidrings 2 mit der Montagekraft ausgelöst oder freigegeben wird, sobald die Messeinrichtung 18 das Erreichen einer bestimmten Lage der Stirnfläche 12a des Rohres 14 in Bezug auf den Montagestutzen 8 detektiert hat.

Eine weitere verfahrenstechnische Ausgestaltung sieht vor, dass die Messeinrichtung 18 vorzugsweise mindestens eine Grenzlage der Stirnfläche 12a des Rohres 14 in Bezug auf den Montagestutzen 8 erfasst. Dabei erfasst die Messeinrichtung 18 die Lage mittels mindestens eines kapazitiven Sensors. Auf der Grundlage der Grenzlage der Stirnfläche 12a des Rohres 14 wird das Beaufschlagen des Schneidrings 2 mit der Montagekraft selbstständig ausgelöst bzw. eingeleitet oder für einen Anwender freigegeben.

Es liegt weiterhin im Rahmen dieses Verfahrens, dass die Messeinrichtung 18 mindestens eine Endlage der Stirnfläche 12a des Rohres 14 in Bezug auf den Montagestutzen 8 mittels mindestens eines kapazitiven Sensors erfasst. Dies geschieht vorzugsweise nachfolgend der Montage. Auf der Grundlage der Endlage der Stirnfläche 12a des Rohres 14 wird bei diesem Verfahrensschritt nach dem Abschluss der Montage eine erfolgreiche oder mangelhafte Montage angezeigt.

Vorteilhaft überwacht die Messeinrichtung 18 den Montageprozess während der Montage, indem es die Lage der Stirnfläche 12a des Rohres 14 in Bezug auf den Montagestutzen 8 mittels mindestens eines kapazitiven Sensors überwacht. In Echtzeit erfolgt auf dieser Grundlage ein Soll-Ist-Abgleich. Weicht die Ist-Lage der Stirnfläche 12a von einer vorprogrammierten Soll-Lage über ein gewisses Maß hinaus ab, wird der Montageprozess unterbrochen und/oder eine Fehlmontage angezeigt.

In Figur 9 ist das Rohr 14 nach dem Montieren des Schneidrings 2, d. h. ein Rohr 14 mit einer Schneidringverbindung gezeigt. Bei der mittels der erfindungsgemäßen Vorrichtung 1 hergestellten Schneidringverbindung handelt es sich um eine, insbesondere hinsichtlich Dichtigkeit, zuverlässige Schneidringverbindung. Dabei sind die für die Ausbildung einer Schneidringverbindung maßgeblichen Montageparameter von der Vorrichtung 1 vorgebbar. Die montagerelevante Einbaulage des Rohres 14, d. h. die ordentliche Lage der Stirnfläche 12a des Rohres 14 in Bezug auf den Montagestutzen 8, ist dabei wie oben beschrieben sichergestellt. Insbesondere ist der Schneidring 2 koaxial zu einer mittleren Rohrlängsachse XR montiert. Während der Montage ist die mittlere Rohrlängsachse XR zumindest im Endbereich 12 des Rohres 14 koaxial mit der mittleren Längsachse X des Montagestutzens. Weitere Parameter, wie z. B. eine Eindringtiefe 100, ein Schneidweg 101 und ein Abstand 102 von der Stirnfläche 12a des Rohres 14 vom Schneidring 2, Grenzdrücke oder Kapazitätsänderungsgrenzen sind vorzugsweise in einem RFID-Chip im Montagestutzen 8 bzw. am Anschlagmittel 20 hinterlegbar und von einem Lese- und/oder Schreibkopf 34 im Werkzeugträger 6 auslesbar.

### Bezugszeichenliste

- 1: Vorrichtung
- 2: Schneidring
- 2a: Schneidkanten
- 2b: Pressfläche
- 4: Gegenhalteplatte
- 4a: Durchführöffnung
- 6: Werkzeugträger
- 8: Montagestutzen
- 10: Aufnahmevertiefung
- 12: Endbereich des Rohres
- 12a: Stirnfläche des Rohres
- 14: Rohr
- 15: Öffnung
- 15a: Erster Teilabschnitt der Innenwandung
- 15b: Zweiter Teilabschnitt der Innenwandung
- 16: Gegenhalteelement
- 17: Aufnahmebereich
- 17a: Kontaktfläche
- 17b: Gewindeabschnitt
- 18: Messeinrichtung
- 20: Anschlagmittel
- 21: Auflage
- 22: Schiebhülse
- 22a: Haltevorsprung
- 24: Vorspannmittel
- 26: Bohrung im Montagestutzen
- 28: Stift
- 30: Stiftkopf
- 30a: Überstand
- 31: Einführabschnitt
- 31a: Innenwand des Einführabschnitts
- 31b: Gegenanschlag
- 32: RFID-Chip
- 33: Einführansatz
- 34: Lese- und/oder Schreibkopf
- 36: Führungsabschnitt
- 36b: Innenwand des Führungsabschnitts
- 38: Spannabschnitt
- 38a: Innenwand des Spannabschnitts
- 40: Auflager
- 42: Stützkragen
- 44: Nut

- 100: Eindringtiefe
- 1001: Schneidweg
- 1002: Abstand zwischen Stirnfläche und Schneidring

- E: Einführrichtung
- W1: Verfahrweg des Anschlagmittels
- W2: Abstand zwischen Messeinrichtung und Stützkragen
- X: Mittlere Längsachse
- XR: Mittlere Rohrlängsachse

## Patentansprüche

1. Vorrichtung (1) zur Montage eines Schneidrings (2) auf einen Endbereich (12) eines Rohres (14), aufweisend eine Gegenhalteplatte (4) mit einer Durchführöffnung (4a) zum Einstecken des Rohres (14), einen Werkzeugträger (6) und einen zwischen dem Werkzeugträger (6) und der Gegenhalteplatte (4) an dem Werkzeugträger (6) gelagerten Montagestutzen (8), welcher mittels des Werkzeugträgers (6) entlang einer mittleren Längsachse (X) zumindest in Richtung der Gegenhalteplatte (4) verschiebbar ist und eine sich entlang der mittleren Längsachse (X) erstreckende Aufnahmevertiefung (10) zur Aufnahme des Endbereichs (12) des Rohres (14) mit einer Stirnfläche (12a) sowie zur Aufnahme des auf den Endbereich (12) aufschiebbaren und auf dem Rohr (14) zu montierenden Schneidrings (2) aufweist, wobei ein Gegenhalteelement (16) auf dem Rohr (14) zwischen dem Schneidring (2) und der Gegenhalteplatte (4) anordbar ist, wobei die Gegenhalteplatte eine Verschiebung des Gegenhalteelementes (16) entlang der Längsachse (X) begrenzt, weiterhin aufweisend eine Messeinrichtung (18) zum Erfassen einer Lage des in die Aufnahmevertiefung (10) eingeführten Rohres (14) mittels eines in der Aufnahmevertiefung (10) axial zu der mittleren Längsachse (X) beweglich angeordneten Anschlagmittels (20), wobei der Montagestutzen (8) axial zu seiner mittleren Längsachse (X) eine Bohrung (26) aufweist, welche sich durch den Montagestutzen (8) erstreckt, und das Anschlagmittel (20) einen sich durch die Bohrung (26) erstreckenden Stift (28) aufweist, wobei das Anschlagmittel (20) über seinen gesamten axial zu der mittleren Längsachse (X) verlaufenden Verfahrweg (W1) in Wirkverbindung mit einer vorgespannten Schiebhülse (22) steht, wobei das Anschlagmittel (20) einen Stiftkopf (30) an dem durch den Montagestutzen (8) geführten Stift (28) auf der dem Werkzeugträger (6) zugewandten Seite des Montagestutzens (8) aufweist, **dadurch gekennzeichnet, dass** die Messeinrichtung (18) im Werkzeugträger (6) ausgebildet ist und mit der Schiebhülse (22) zusammenwirkt, welche mittels eines Vorspannmittels (24) gegen das Anschlagmittel (20) anliegend vorgespannt ist und der sich durch die Bohrung (26) erstreckende Stift (28) in einer Wirkverbindung mit der Schiebhülse (22) im Werkzeugträger (6) steht und der Stiftkopf (30) an der Schiebhülse (22) anliegt und bei einer axialen Verschiebung des Anschlagmittels (20) entlang der mittleren Längsachse (X) auf die Schiebhülse (22) im Werkzeugträger (6) einwirkt.

2. Vorrichtung (1) nach Anspruch 1,
**dadurch gekennzeichnet, dass** das Gegenhalteelement (16) als eine um die mittlere Längsachse (X) um das Rohr (14) drehbare Mutter, insbesondere als Überwurfmutter, ausgebildet ist.

3. Vorrichtung (1) nach Anspruch 1 oder 2,
**dadurch gekennzeichnet, dass**
der Stift (28) vollumfänglich durch die Bohrung (26) geführt ist.

4. Vorrichtung (1) nach einem der Ansprüche 1 bis 3,
**dadurch gekennzeichnet, dass**
der Stiftkopf (30) einen Überstand (30a) aufweist, welcher radial über einen Einführansatz (33) ragt und die Auflagefläche für die Schiebhülse (22) bildet und der Werkzeugträger (6) einen Einführabschnitt (31) aufweist, wobei der Einführansatz (33) und der Stiftkopf (30) in den Einführabschnitt (31) des Werkzeugträgers (6) einführbar sind und im eingeführten Zustand der Einführansatz (33) und der Stiftkopf (30) mit seinem Überstand (30a) jeweils vollumfänglich an einer Innenwand (31a) des Einführabschnitts (31) anliegen.

5. Vorrichtung (1) nach Anspruch 4,
**dadurch gekennzeichnet, dass**
der Einführabschnitt (31) im Werkzeugträger (6) derart ausgebildet ist, dass dieser eine Gegenanschlag (31b) für die Schiebhülse (22) bildet, so dass die axiale Verschiebung der Schiebhülse (22) entlang der Längsachse (X) begrenzt wird, wobei ein Haltevorsprung (22a) der Schiebhülse (22) an dem dem Montagestutzen (8) zugewandten Ende radial zur Längsachse (X) nach innen weisend über den Gegenanschlag (31b) hinausragt und in einem direkten Wirkkontakt mit dem Überstand (30a) des Stiftkopfes (30) steht.

6. Vorrichtung (1) nach einem der Ansprüche 1 bis 5,
**dadurch gekennzeichnet, dass**
der Stiftkopf (30) einen RFID-Chip (32) aufweist und der Werkzeugträger (6) einen Lese- und/oder Schreibkopf (34) zum Auslesen und/oder Beschreiben des RFID-Chips (32) aufweist.

7. Vorrichtung (1) nach Anspruch 6,
**dadurch gekennzeichnet, dass**
der Lese- und/oder Schreibkopf (34) in der Schiebhülse (22) zusammen mit der Schiebhülse (22) axial zu der mittleren Längsachse (X) verschiebbar gelagert ist und insbesondere durch die axiale Bewegung vom Stiftkopf (30) verschoben werden kann.

8. Vorrichtung (1) nach einem der Ansprüche 1 bis 7,
**dadurch gekennzeichnet, dass**
der Werkzeugträger (6) einen Führungsabschnitt (36) und einen Spannabschnitt (38) aufweist, wobei die Schiebhülse (22) vollumfänglich an einer Innenwand (36a) des Führungsabschnittes (36) anliegt und der Spannabschnitt (38) derart ausgebildet ist, dass das Vorspannmittel (24), insbesondere eine Feder, beim Stauchen umfänglich an einer Innenwand (38a) des Spannabschnitts (38) geführt wird.

9. Vorrichtung (1) nach Anspruch 8,
**dadurch gekennzeichnet, dass**
die Querschnittsfläche senkrecht zu der mittleren Längsachse (X) des Führungsabschnitts (36) kleiner ist als die Querschnittsfläche senkrecht zu der mittleren Längsachse (X) des Spannabschnitts (38), wobei an der Übergangsstelle vom Führungsabschnitt (36) zum Spannabschnitt (38) ein Auflager (40) für einen korrespondierend zum Auflager (40) ausgebildeten Stützkragen (42) der Schiebhülse (22) ausgebildet ist, wobei die axiale Bewegung der Schiebhülse (22) entlang der mittleren Längsachse (X) in Richtung zu der Gegenhalteplatte (4) durch die Auflage des Stützkragens (42) auf dem Auflager (40) begrenzt wird.

10. Vorrichtung (1) nach Anspruch 9,
**dadurch gekennzeichnet, dass**
die Messeinrichtung (18) als mindestens eine Positionsüberwachungseinheit, insbesondere als ein kapazitiver Sensor ausgebildet ist, welcher in einer Nut (44) im Auflager (40) angeordnet ist und auf einen axialen Abstand (W2) entlang der mittleren Längsachse (X) zum Stützkragen (42) reagiert.

11. Vorrichtung (1) nach einem der Ansprüche 1 bis 10,
**dadurch gekennzeichnet, dass**
ein Steuergerät ein von der Messeinrichtung (18) erzeugtes Zustandssignal derartig verarbeiten kann, dass auf dessen Basis insbesondere automatisch die Montage des Schneidrings (2) an dem Rohr (14) eingeleitet und gesteuert werden kann.

12. Vorrichtung (1) nach Anspruch 11,
**dadurch gekennzeichnet, dass**
basierend auf dem Zustandssignal ein optisches und/oder ein akustisches Informationssignal für einen Anwender bezüglich der Lage der Stirnfläche (12a) des Rohres (14) in Bezug auf den Montagestutzen (8) und/oder den Fortschritt des Montageprozesses erzeugt wird.

13. Verfahren zur Montage eines Schneidrings (2) an einem Rohr (14), unter Verwendung einer Vorrichtung (1) nach einem der Ansprüche 1 bis 12, aufweisen folgende Verfahrensschritte,
- Montieren eines Montagestutzens (8) an einem Werkzeugträger (6) zwischen dem Werkzeugträger (6) und einer Gegenhalteplatte (4),
- Aufstecken eines Gegenhalteelements (16), aufweisend einen Aufnahmebereich (17) zur Aufnahme des Schneidrings (2) sowie einen Teilbereich des Montagestutzens (8), auf einen Endbereich (12) eines Rohres (14) mit einer am Endbereich ausgebildeten Stirnfläche (12a),
- Aufstecken eines zu montierenden Schneidrings (2), aufweisend zumindest eine Schneidkante (2a), auf den Endbereich (12a) des Rohres (14),
- Einführen des Endbereichs (12) mitsamt dem Schneidring (2) in eine Aufnahmevertiefung (10) des Montagestutzens (8) in einer Einführrichtung (E) axial zu einer mittleren Längsachse (X) der Aufnahmevertiefung (10), wobei der Schneidring (2) und das Gegenhalteelement (16) zwischen Gegenhalteplatte (4) und Werkzeugträger (6) liegen,
- Erfassen einer Lage des in die Aufnahmevertiefung (10) eingeführten Rohres (14) mittels eines in der Aufnahmevertiefung (10) axial zu der mittleren Längsachse (X) beweglich angeordneten Anschlagmittels (20),
- Beaufschlagen des Schneidrings (2) mit einer, vorzugsweise von einer Presseinrichtung erzeugten, Montagekraft, wobei der Werkzeugträger (6) in Richtung der Gegenhalteplatte (4) verschoben wird, so dass die Schneidkante(n) (2a) des Schneidrings (2) in das Rohr (14) dringt/dringen,
**dadurch gekennzeichnet, dass** die Lageerfassung des Rohres (14) in Bezug auf den Montagestutzen (8) mit einer Messeinrichtung (18) gemäß dem kennzeichnenden Merkmal des Anspruchs 1 im Werkzeugträger erfolgt.

14. Verfahren nach Anspruch 13,
**dadurch gekennzeichnet, dass**
die Lageerfassung des Rohres (14) in Bezug auf den Montagestutzen (8) mit einer Vorrichtung gemäß mindestens einem kennzeichnenden Merkmal der Ansprüche 2 bis 12 erfolgt.

## Claims

1. Device (1) for mounting a cutting ring (2) on an end region (12) of a pipe (14), having a backing plate (4) with a passage opening (4a) for the insertion of the pipe (14), a tool carrier (6) and a mounting socket (8) which is mounted on the tool carrier (6) between the tool carrier (6) and the backing plate (4) and which can be displaced by means of the tool carrier (6) along a central longitudinal axis (X), at least in the direction of the backing plate (4), and a receiving recess (10) extending along the central longitudinal axis (X) for receiving the end region (12) of the pipe (14) with an end face (12a) and for receiving the cutting ring (2) which can be pushed onto the end region (12) and to be mounted on the pipe (14), wherein a backing element (16) can be arranged on the pipe (14) between the cutting ring (2) and the backing plate (4), wherein the backing plate limits a displacement of the backing element (16) along the longitudinal axis (X), further having a measuring device (18) for detecting a position of the pipe (14) inserted into the receiving recess (10) by means of a stop means (20) arranged in the receiving recess (10) so as to be movable axially relative to the central longitudinal axis (X), wherein the mounting socket (8) has a bore (26) arranged axially relative to its central longitudinal axis (X), which extends through the mounting socket (8), and the stop means (20) has a pin (28) extending through the bore (26), wherein the stop means (20) is in operative connection with a preloaded sliding sleeve (22) over the whole of its travel (W1) running axially relative to the central longitudinal axis (X), wherein the stop means (20) has a pin head (30) on the pin (28) led through the mounting socket (8) on the side of the mounting socket (8) that faces the tool carrier (6),
**characterized in that**
the measuring device (18) is formed in the tool carrier (6) and interacts with the sliding sleeve (22) which is preloaded by means of a preloading means (24) so as to rest against the stop means (20), and the pin (28) extending through the bore (26) is operatively connected to the sliding sleeve (22) in the tool carrier (6), and the pin head (30) rests on the sliding sleeve (22) and, during an axial displacement of the stop means (20) along the central longitudinal axis (X), acts on the sliding sleeve (22) of the tool carrier (6).

2. Apparatus (1) according to Claim 1,
**characterized in that**
the backing element (16) is formed as a nut that can be rotated about the pipe (14) about the central longitudinal axis (X), in particular as a union nut.

3. Apparatus (1) according to Claim 1 or 2, **characterized in that**
the pin (28) is led fully through the bore (26).

4. Apparatus (1) according to one of Claims 1 to 3, **characterized in that**
the pin head (30) has a projection (30a) which projects radially beyond an insertion attachment (33) and forms the contact surface for the sliding sleeve (22), and the tool carrier (6) has an insertion section (31), wherein the insertion attachment (33) and the pin head (30) can be inserted into the insertion section (31) of the tool carrier (6) and, when inserted, the insertion attachment (33) and the pin head (30) with its projection (30a) each rest fully on an inner wall (31a) of the insertion section (31) .

5. Apparatus (1) according to Claim 4,
**characterized in that**
the insertion section (31) is formed in the tool carrier (6) in such a way that it forms a mating stop (31b) for the sliding sleeve (22), so that the axial displacement of the sliding sleeve (22) along the longitudinal axis (X) is limited, wherein a retaining projection (22a) of the sliding sleeve (22) on the end facing the mounting socket (8) points radially inwards in the direction of the longitudinal axis (X) and projects beyond the mating stop (31b) and is in direct operative contact with the projection (30a) of the pin head (30).

6. Apparatus (1) according to one of Claims 1 to 5, **characterized in that**
the pin head (30) has an RFID chip (32) and the tool carrier (6) has a read and/or write head (34) for reading from and/or writing to the RFID chip (32).

7. Apparatus (1) according to Claim 6,
**characterized in that**
the read and/or write head (34) is mounted in the sliding sleeve (22) such that it can be displaced axially relative to the central longitudinal axis (X) together with the sliding sleeve (22) and in particular can be displaced by the axial movement of the pin head (30).

8. Apparatus (1) according to one of Claims 1 to 7, **characterized in that**
the tool carrier (6) has a guide section (36) and a clamping section (38), wherein the sliding sleeve (22) rests fully on an inner wall (36a) of the guide section (36), and the clamping section (38) is formed in such a way that the preloading means (24), in particular a spring, is guided fully on an inner wall (38a) of the clamping section (38) when compressed.

9. Apparatus (1) according to Claim 8,
**characterized in that**
the cross-sectional area perpendicular to the central longitudinal axis (X) of the guide section (36) is smaller than the cross-sectional area perpendicular to the central longitudinal axis (X) of the clamping section (38), wherein, at the transition point from the guide section (36) to the clamping section (38), an abutment (40) for a supporting collar (42) of the sliding sleeve (22) that corresponds to the abutment (40) is formed, wherein the axial movement of the sliding sleeve (22) along the central longitudinal axis (X) in the direction towards the backing plate (4) is limited by the contact of the supporting collar (42) on the abutment (40).

10. Apparatus (1) according to Claim 9,
**characterized in that**
the measuring device (18) is formed as at least one position monitoring unit, in particular as a capacitive sensor, which is arranged in a groove (44) in the abutment (40) and reacts to an axial spacing (W2) relative to the supporting collar (42) along the central longitudinal axis (X).

11. Apparatus (1) according to one of Claims 1 to 10, **characterized in that**
a control device is able to process a status signal generated by the measuring device (18) in such a way that, on the basis thereof, the mounting of the cutting ring (2) on the pipe (14) can be initiated and controlled, in particular automatically.

12. Apparatus (1) according to Claim 11,
**characterized in that**
on the basis of the status signal, a visual and/or an acoustic information signal regarding the position of the end face (12a) of the pipe (14) in relation to the mounting socket (8) and/or the progress of the mounting process is generated for a user.

13. Method for mounting a cutting ring (2) on a pipe (14) by using an apparatus (1) according to one of Claims 1 to 12, having the following method steps
- mounting a mounting socket (8) on a tool carrier (6) between the tool carrier (6) and a backing plate (4),
- pushing a backing element (16), having a receiving region (17) for receiving the cutting ring (2) and a sub-region of the mounting socket (8), onto an end region (12) of a pipe (14) with an end face (12a) formed in the end region,
- pushing a cutting ring (2) to be mounted, having at least one cutting-edge (2a), onto the end region (12a) of the pipe (14),
- inserting the end region (12) together with the cutting ring (2) into a receiving recess (10) of the mounting socket (8) in an insertion direction (E) axial relative to a central longitudinal axis (X) of the receiving recess (10), wherein the cutting ring (2) and the backing element (16) are located between the backing plate (4) and the tool carrier (6),
- detecting a position of the pipe (14) inserted into the receiving recess (10) by means of a stop means (20) which is arranged in the receiving recess (10) so as to be movable axially relative to the central longitudinal axis (X),
- applying a mounting force, preferably generated by a pressing device, to the cutting ring (2), wherein the tool carrier (6) is displaced in the direction of the backing plate (4), so that the cutting-edge (s) (2a) of the cutting ring (2) penetrate(s) into the pipe (14),
**characterized in that**
the detection of the position of the pipe (14) in relation to the mounting socket (8) is carried out with a measuring device (18) according to the characterising feature of Claim 1 in the tool carrier.

14. Method according to Claim 13,
**characterized in that** the detection of the position of the pipe (14) in relation to the mounting socket (8) is carried out by using a device according to at least one characterizing feature of Claims 2 to 12.

## Revendications

1. Dispositif (1) de montage d'une bague coupante (2) sur une région d'extrémité (12) d'un tube (14), présentant une plaque de contre-appui (4) dotée d'une ouverture de passage (4a) pour l'emmanchement du tube (14), un porte-outil (6) et un manchon de montage (8) placé entre le porte-outil (6) et la plaque de contre-appui (4) sur le porte-outil (6), lequel manchon est coulissant au moyen du porte-outil (6) le long d'un axe longitudinal central (X) au moins en direction de la plaque de contre-appui (4) et présente un évidement de réception (10) s'étendant le long de l'axe longitudinal central (X) pour la réception de la région d'extrémité (12) du tube (14) par une face frontale (12a) ainsi que pour la réception de la bague coupante (2) pouvant être enfilée sur la région d'extrémité (12) et devant être montée sur le tube (14), un élément de contre-appui (16) pouvant être disposé sur le tube (14) entre la bague coupante (2) et la plaque de contre-appui (4), la plaque de contre-appui limitant un coulissement de l'élément de contre-appui (16) le long de l'axe longitudinal (X), présentant en outre un dispositif de mesure (18) servant à la détection d'une position du tube (14) inséré dans l'évidement de réception (10) au moyen d'un moyen de butée (20) disposé de manière déplaçable axialement par rapport à l'axe longitudinal central (X) dans l'évidement de réception (10), le manchon de montage (8) présentant axialement par rapport à son axe longitudinal central (X) un alésage (26), lequel s'étend à travers le manchon de montage (8), et le moyen de butée (20) présentant une goupille (28) s'étendant à travers l'alésage (26), le moyen de butée (20) étant, sur toute sa course de déplacement (W1) s'étendant axialement par rapport à l'axe longitudinal central (X), en liaison fonctionnelle avec une douille coulissante (22) précontrainte, le moyen de butée (20) présentant une tête de goupille (30) sur la goupille (28) guidée à travers le manchon de montage (8) sur le côté du manchon de montage (8) tourné vers le porte-outil (6), **caractérisé en ce que** le dispositif de mesure (18) est réalisé dans le porte-outil (6) et coopère avec la douille coulissante (22), laquelle est précontrainte au moyen d'un moyen de précontrainte (24) de manière à s'appuyer contre le moyen de butée (20) et la goupille (28) s'étendant à travers l'alésage (26) est en liaison fonctionnelle avec la douille coulissante (22) dans le porte-outil (6) et la tête de goupille (30) s'appuie contre la douille coulissante (22) et agit sur la douille coulissante (22) dans le porte-outil (6) lors d'un coulissement axial du moyen de butée (20) le long de l'axe longitudinal central (X).

2. Dispositif (1) selon la revendication 1, **caractérisé en ce que** l'élément de contre-appui (16) est réalisé sous la forme d'un écrou, en particulier sous la forme d'un écrou d'accouplement, pouvant tourner autour du tube (14) autour de l'axe longitudinal central (X).

3. Dispositif (1) selon la revendication 1 ou 2, **caractérisé en ce que**
la goupille (28) est guidée entièrement à travers l'alésage (26).

4. Dispositif (1) selon l'une des revendications 1 à 3,
**caractérisé en ce que**
la tête de goupille (30) présente une surlongueur (30a), laquelle dépasse radialement au-delà d'une saillie d'insertion (33) et forme la surface d'appui pour la douille coulissante (22) et le porte-outil (6) présente une partie d'insertion (31), la saillie d'insertion (33) et la tête de goupille (30) pouvant être insérées dans la partie d'insertion (31) du porte-outil (6) et, dans l'état inséré, la saillie d'insertion (33) et la tête de goupille (30), par sa surlongueur (30a), s'appuyant respectivement entièrement contre une paroi intérieure (31a) de la partie d'insertion (31).

5. Dispositif (1) selon la revendication 4, **caractérisé en ce que**
la partie d'insertion (31) dans le porte-outil (6) est réalisée de telle sorte que celle-ci forme une contre-butée (31b) pour la douille coulissante (22), de sorte que le coulissement axial de la douille coulissante (22) le long de l'axe longitudinal (X) soit limité, une saillie de retenue (22a) de la douille coulissante (22) dépassant au-delà de la contre-butée (31b) de manière tournée vers l'intérieur radialement par rapport à l'axe longitudinal (X) à l'extrémité tournée vers le manchon de montage (8) et étant en contact fonctionnel direct avec la surlongueur (30a) de la tête de goupille (30).

6. Dispositif (1) selon l'une des revendications 1 à 5,
**caractérisé en ce que**
la tête de goupille (30) présente une puce RFID (32) et le porte-outil (6) présente une tête de lecture et/ou d'écriture (34) pour la lecture et/ou l'écriture dans la puce RFID (32).

7. Dispositif (1) selon la revendication 6, **caractérisé en ce que**
la tête de lecture et/ou d'écriture (34) dans la douille coulissante (22) est montée coulissante conjointement avec la douille coulissante (22) axialement par rapport à l'axe longitudinal central (X) et peut en particulier être déplacée par le déplacement axial de la tête de goupille (30).

8. Dispositif (1) selon l'une des revendications 1 à 7,
**caractérisé en ce que**
le porte-outil (6) présente une partie de guidage (36) et une partie de serrage (38), la douille coulissante (22) s'appuyant entièrement contre une paroi intérieure (36a) de la partie de guidage (36) et la partie de serrage (38) étant réalisée de telle sorte que le moyen de précontrainte (24), en particulier un ressort, soit guidé de manière périphérique contre une paroi intérieure (38a) de la partie de serrage (38) en cas de refoulement.

9. Dispositif (1) selon la revendication 8, **caractérisé en ce que**
l'aire en section transversale perpendiculairement à l'axe longitudinal central (X) de la partie de guidage (36) est inférieure à l'aire en section transversale perpendiculairement à l'axe longitudinal central (X) de la partie de serrage (38), un appui (40) pour un collet de support (42), réalisé de manière correspondante à l'appui (40), de la douille coulissante (22) étant réalisé au point de transition de la partie de guidage (36) par rapport à la partie de serrage (38), le déplacement axial de la douille coulissante (22) le long de l'axe longitudinal central (X) en direction de la plaque de contre-appui (4) étant limité par l'appui du collet de support (42) sur l'appui (40).

10. Dispositif (1) selon la revendication 9, **caractérisé en ce que**
le dispositif de mesure (18) est réalisé sous la forme d'au moins une unité de contrôle de position, en particulier sous la forme d'un capteur capacitif, lequel est disposé dans une rainure (44) dans l'appui (40) et réagit à une distance axiale (W2) le long de l'axe longitudinal central (X) par rapport au collet de support (42) .

11. Dispositif (1) selon l'une des revendications 1 à 10,
**caractérisé en ce**
**qu'**un appareil de commande peut traiter un signal d'état produit par le dispositif de mesure (18) de telle sorte que, sur la base de ce signal, le montage de la bague coupante (2) sur le tube (14) peut être amorcé et commandé en particulier automatiquement.

12. Dispositif (1) selon la revendication 11, **caractérisé en ce que**,
sur la base du signal d'état, un signal d'information optique et/ou un signal d'information acoustique destiné(s) à un utilisateur et se rapportant à la position de la face frontale (12a) du tube (14) par rapport au manchon de montage (8) et/ou au déroulement du processus de montage est/sont produit(s).

13. Procédé de montage d'une bague coupante (2) sur un tube (14), à l'aide d'un dispositif (1) selon l'une des revendications 1 à 12, présentant les étapes de procédé suivantes,
- montage d'un manchon de montage (8) sur un porte-outil (6) entre le porte-outil (6) et une plaque de contre-appui (4),
- emmanchement d'un élément de contre-appui (16), présentant une région de réception (17) pour la réception de la bague coupante (2) ainsi qu'une région partielle du manchon de montage (8), sur une région d'extrémité (12) d'un tube (14) doté d'une face frontale (12a) réalisée au niveau de la région d'extrémité,
- emmanchement d'une bague coupante (2) devant être montée, présentant au moins une arête coupante (2a), sur la région d'extrémité (12a) du tube (14),
- insertion de la région d'extrémité (12) avec la bague coupante (2) dans un évidement de réception (10) du manchon de montage (8) dans un sens d'insertion (E) axialement par rapport à un axe longitudinal central (X) de l'évidement de réception (10), la bague coupante (2) et l'élément de contre-appui (16) se situant entre la plaque de contre-appui (4) et le porte-outil (6),
- détection d'une position du tube (14) inséré dans l'évidement de réception (10) au moyen d'un moyen de butée (20) disposé de manière déplaçable axialement par rapport à l'axe longitudinal médian (X) dans l'évidement de réception (10),
- sollicitation de la bague coupante (2) avec une force de montage produite de préférence par un dispositif de pressage, le porte-outil (6) étant déplacé en direction de la plaque de contre-appui (4), de sorte que l'arête coupante/les arêtes coupantes (2a) de la bague coupante (2) pénètre(nt) dans le tube (14),
**caractérisé en ce que** la détection de position du tube (14) par rapport au manchon de montage (8) s'effectue à l'aide d'un dispositif de mesure (18) selon la caractéristique de la revendication 1 dans le porte-outil.

14. Procédé selon la revendication 13,
**caractérisé en ce que**
la détection de position du tube (14) par rapport au manchon de montage (8) s'effectue à l'aide d'un dispositif selon au moins une caractéristique des revendications 2 à 12.
